# EUROPÄISCHE PATENTANMELDUNG

(11) **EP 2 067 604 A2**
(43) Veröffentlichungstag der Anmeldung: **10.06.2009**
(21) Anmeldenummer: 08017115.0
(22) Anmeldetag: 29.09.2008
(51) Int. Cl.: B29C 63/48, B32B 37/15, B60R 13/04, B32B 15/08

(54) **Verfahren zum Herstellen eines Bauteils und Bauteil für ein Kraftfahrzeug**

(30) Priorität: 06.12.2007 DE 102007058714
(71) Anmelder: Daimler AG, 70327 Stuttgart (DE)
(72) Erfinder: Wazula, Fritz, 75365 Calw (DE)

(57) **Zusammenfassung**

Die Erfindung betrifft ein Verfahren zum Herstellen eines Bauteils, insbesondere einer Dachzierleiste, für ein Kraftfahrzeug, bei welchem zunächst ein Haftvermittler (12) zumindest bereichsweise auf einen Grundkörper (10) des Bauteils aufgebracht und anschließend eine aus einem Transferlack gefertigte Lackfolie (14) zumindest im Bereich des Haftvermittlers (12) auf dem Grundkörper (10) angeordnet und mittels des Haftvermittlers (12) stoffschlüssig mit dem Grundkörper (10) verbunden wird. Die Erfindung betrifft weiterhin ein Bauteil, insbesondere eine Dachzierleiste, für ein Kraftfahrzeug.

## Beschreibung

Die Erfindung betrifft ein Verfahren zum Herstellen eines Bauteils, insbesondere einer Dachzierleiste, sowie ein Bauteil für ein Kraftfahrzeug gemäß dem Oberbegriff des Patentanspruchs 8.

Ein derartiges Verfahren sowie ein derartiges Bauteil sind dabei beispielsweise aus der DE 34 22 965 C2 als bekannt zu entnehmen. Dabei wird zunächst ein flüssiger Transferlack auf ein Trägermaterial aufgebracht und teilweise ausgehärtet. Die dadurch entstehende aus dem Trägermaterial und dem Transferlack bestehende Folie wird anschließend zusammen mit Dekorlagen mit dem als Schichtstoffplatte ausgebildeten Bauteil verpresst und das Trägermaterial nach dem Abkühlen abgezogen.

Aufgabe der vorliegenden Erfindung ist es, ein Bauteil der eingangs genannten Art bereitzustellen, welches schnell und kostengünstig herstellbar ist und dessen Oberfläche eine hohe Kratzfestigkeit besitzt.

Die Aufgabe wird erfindungsgemäß durch ein Verfahren zum Herstellen eines Bauteils, insbesondere einer Dachzierleiste, für ein Kraftfahrzeug, bei welchem zunächst ein Haftvermittler (12) zumindest bereichsweise auf einen Grundkörper (10) des Bauteils aufgebracht und anschließend eine aus einem Transferlack gefertigte Lackfolie (14) zumindest im Bereich des Haftvermittlers (12) auf dem Grundkörper (10) angeordnet und mittels des Haftvermittlers (12) stoffschlüssig mit dem Grundkörper (10) verbunden wird, wobei der Haftvermittler (12) mittels eines Extrusionsverfahrens auf den Grundkörper (10) aufgebracht wird mit den Merkmalen des Anspruchs 1 sowie durch ein weiteres Verfahren, bei welchem eine aus einem Transferlack gefertigte Lackfolie (14) und der Grundkörper (10) des Bauteils in ein Spritzgusswerkzeug eingebracht und ein Haftvermittler (12) zwischen Grundkörper (10) und Lackfolie (14) mittels eines Spritzgussverfahrens eingebracht wird, wobei die Lackfolie zumindest im Bereich des Haftvermittlers (12) auf dem Grundkörper (10) angeordnet und mittels des Haftvermittlers (12) stoffschlüssig mit dem Grundkörper (10) verbunden wird, mit den Merkmalen von Anspruch 2 gelöst.
Eine weitere Lösung bildet ein Bauteil für ein Kraftfahrzeug mit einem Grundkörper (10), welcher als Oberflächenschutz eine mittels eines Haftvermittlers (12) stoffschlüssig mit dem Grundkörper (10) verbundene Deckschicht aufweist, wobei die Deckschicht eine aus einem Transferlack gefertigte Lackfolie (14) umfasst, mit den Merkmalen des Patentanspruchs 8.

Vorteilhafte Ausgestaltungen mit zweckmäßigen und nichttrivialen Weiterbildungen der Erfindung sind in den jeweiligen Unteransprüchen angegeben, wobei vorteilhafte Ausgestaltungen des Verfahrens als vorteilhafte Ausgestaltungen des Bauteils und umgekehrt anzusehen sind.

Bei dem ersten erfindungsgemäßen Verfahren zum Herstellen eines Bauteils, insbesondere einer Dachzierleiste, für ein Kraftfahrzeug wird zunächst ein Haftvermittler zumindest bereichsweise auf einen Grundkörper des Bauteils aufgebracht und anschließend eine aus einem Transferlack gefertigte Lackfolie zumindest im Bereich des Haftvermittlers auf dem Grundkörper angeordnet und mittels des Haftvermittlers stoffschlüssig mit dem Grundkörper verbunden. Dies ermöglicht eine schnelle und kostengünstige Herstellung des betreffenden Bauteils. Aufgrund der hohen Kratzfestigkeit der aus dem Transferlack gefertigten Lackfolie wird auch die Kratzfestigkeit der Oberfläche des Bauteils entscheidend verbessert. Die hohe Kratzfestigkeit führt zudem zu deutlich niedrigeren Ausschussraten während des Herstellungsverfahrens und der späteren Montage des Bauteils und gewährleistet weiterhin einen gleich bleibend hohen Qualitätseindruck des Bauteils, wodurch ein deutlicher Kundennutzen sowie ein beständiges Verhalten des Bauteils im Feld erzielt werden.

Ein weiterer wichtiger Vorteil der Verwendung einer Transferlack-Folie ist es, dass diese gezielt gefärbt werden kann. Dies ist insbesondere von Vorteil, wenn das fertige Bauteil in einer Fahrzeugkarosserie, insbesondere als Dachzierleiste eingesetzt werden soll. Hier ist es für das Bauteil sehr wichtig exakt die gleiche Farbe und denselben Glanz wie auf der Fahrzeugkarosserie einzustellen. Diesem Erfordernis kann die Transferlack-Folie im Gegensatz zu einer späteren Lackierung besonders gut nachkommen.

In bevorzugter Ausgestaltung der Erfindung weist der Transferlack mindestens eine Farb- und/oder eine Glanzlackschicht auf. Der Grundkörper kann die in bevorzugter Ausgestaltung hochglänzend, beispielsweise in Chrom-Optik ausgeführt sein. Insbesondere für den Fall, dass der Grundkörper aus einem hochglänzenden Metall, wie Aluminium oder verchromtes Metall oder Kunststoff gebildet ist, wird ein farbloser und durchscheinender Transferlack bevorzugt.

Ein weiterer Aspekt der Erfindung betrifft ein Verfahren, welches an die Spritzgusstechnologie angelehnt ist. Bei dem Verfahren zum Herstellen eines Bauteils, insbesondere einer Dachzierleiste, für ein Kraftfahrzeug, werden zunächst eine aus einem Transferlack gefertigte Lackfolie (14) oder Transferlack-Folie und der Grundkörper (10) des Bauteils in ein Spritzgusswerkzeug eingebracht. Die Anordnung kann dergestalt sein, dass sich die beiden Teile direkt gegenüber liegen, oder auch erst durch seitliche Bewegung bzw. Verschieben zueinander gebracht werden. Darauf wird mittels Spritzguss ein Haftvermittler (12) zwischen Grundkörper (10) und Lackfolie (14) eingebracht. Durch Auffüllen des Spaltes zwischen den beiden Teilen, oder auch durch Aneinanderführen von Grundkörper und Transferlack-Folie im Spritzgusswerkzeug wird die Lackfolie zumindest im Bereich des Haftvermittlers (12) auf dem Grundkörper (10) angeordnet und mittels des Haftvermittlers (12) stoffschlüssig mit dem Grundkörper (10) verbunden.

Eine vorteilhafte Ausgestaltung sieht vor, die Transferlack-Folie (14) zunächst im Spritzgießprozess zu hinterspritzten und danach mit dem Grundkörper zum Verbinden zusammenzubringen.

Als Haftvermittler eignen sich unterschiedliche Thermoplaste. Besonders geeignet ist hierbei Polyvinylchlorid (PVC).

Ein weiterer Aspekt der Erfindung betrifft ein Bauteil für ein Kraftfahrzeug mit einem Grundkörper, welcher als Oberflächenschutz eine mittels eines Haftvermittlers stoffschlüssig mit dem Grundkörper verbundene Deckschicht aufweist, wobei eine hohe Kratzfestigkeit der Oberfläche des Grundkörpers erfindungsgemäß dadurch erzielt wird, dass die Deckschicht eine aus einem Transferlack gefertigte Lackfolie umfasst. Aufgrund der hohen Kratzfestigkeit der Lackfolie ergeben sich während des Herstellungsverfahrens deutlich verringerte Ausschussraten. Zudem kann das Bauteil aufgrund seines vergleichsweise einfachen Aufbaus besonders schnell und kostengünstig hergestellt werden.

Der Grundkörper, insbesondere in der Ausführung einer Zierleiste ist bevorzugt aus Aluminium und/oder einer Aluminium-Legierung aufgebaut. Hierbei wird bevorzugt eine Transferlack-Folie verwendet, die nur farblose oder transparente Lackschichten aufweist, so dass der metallische Glanz des Aluminiums durchscheinen kann.

Eine weitere Variante sieht vor, dass die Transferlack-Folie die in Kraftfahrzeugfarbe aufweist. Dabei kann die Folie auch mehrere Farb-Schichten und gegebenenfalls eine Klarlackschicht aufweisen.

Weitere Vorteile, Merkmale und Einzelheiten der Erfindung ergeben sich aus der nachfolgenden Beschreibung eines Ausführungsbeispiels sowie anhand der Zeichnungen, betreffend die Verfahrensvariante mit dem Extrudieren. Dabei zeigen:
- Fig. 1: eine schematische seitliche Schnittansicht eines Bauteils gemäß einem Ausführungsbeispiel; und
- Fig. 2: eine Prinzipdarstellung einer zum Herstellen des in Fig. 1 gezeigten Bauteils verwendeten Werkzeugmaschine.

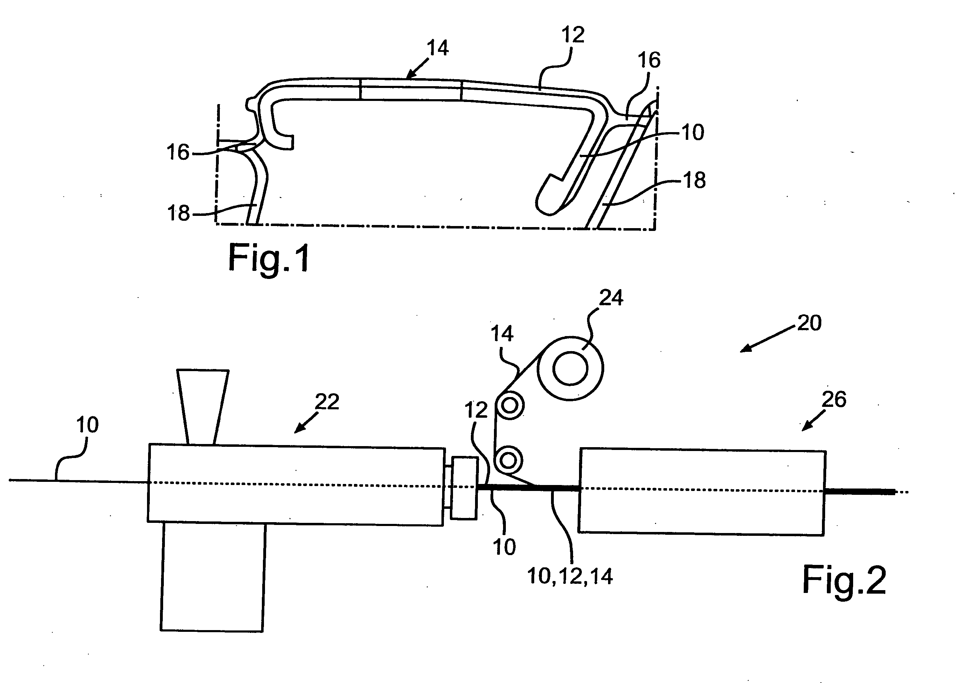

Fig. 1 zeigt eine schematische seitliche Schnittansicht eines vorliegend als Dachzierleiste ausgebildeten Bauteils für ein Kraftfahrzeug gemäß einem Ausführungsbeispiel. Das Bauteil umfasst dabei einen Grundkörper 10, welcher als Oberflächenschutz eine mittels eines Haftvermittlers 12 stoffschlüssig mit dem Grundkörper 10 verbundene Lackfolie 14 aufweist. Die Lackfolie 14 besteht dabei aus einem ausgehärteten Transferlack und besitzt dadurch eine mit einem Karosserielack vergleichbare Kratzfestigkeit. Der Grundkörper 10 des Bauteils besteht dabei aus einer Aluminiumlegierung, als Haftvermittler 12 wird ein PVC-Kunststoff verwendet. Zur Herstellung der Lackfolie 14 geeignete Transferlacke können eine Vielzahl von Materialien wie beispielsweise Polyvinylchloride, Acrylate, Polyester, Polyene, Polyurethane, Polycarbonate, Silikone, Harze oder sonstige, dem Fachmann geläufige Polymere oder Copolymere umfassen. Das als Dachzierleiste ausgebildete Bauteil umfasst weiterhin mehrere Dichtlippen 16, mittels welchen eine Öffnung einer Karosserie 18 des Kraftfahrzeugs wasserabweisend abgedichtet ist.

Fig. 2 zeigt eine Prinzipdarstellung einer zum Herstellen des in Fig. 1 gezeigten Bauteils verwendeten Werkzeugmaschine 20. Dabei wird zunächst der aus einem Aluminiumprofil bestehende Grundkörper 10 in einem Extruder 22 zumindest bereichsweise mit der als Haftvermittler 12 dienenden PVC-Schmelze beschichtet, wobei gleichzeitig die Dichtlippen 16 angeformt werden. Anschließend wird die aus dem ausgehärteten Transferlack bestehende Lackfolie 14 von einer Rolle 24 abgewickelt und als Deckschicht auf den Grundkörper 10 bzw. den noch nicht ausgehärteten Haftvermittler 12 appliziert. In einer anschließenden Kühlstrecke 26 wird das gesamte Bauteil mit Hilfe eines Wasserbads abgekühlt. Dabei härtet der Haftvermittler 12 aus, so dass die Lackfolie 14 stoffschlüssig mit dem Grundkörper 10 verbunden wird. Aufgrund der hohen Kratzfestigkeit der Lackfolie 14 ergeben sich deutlich verringerte Ausschussraten und entsprechende Zeit- und Kostenvorteile sowohl bei der Herstellung als auch bei der Montage des Bauteils an der Karosserie 18. Durch die hohe Widerstandsfähigkeit der Deckschicht des Bauteils ergibt sich weiterhin eine deutlich erhöhte Lebensdauer und ein entsprechender Kundennutzen.

## Patentansprüche

1. Verfahren zum Herstellen eines Bauteils, insbesondere einer Dachzierleiste, für ein Kraftfahrzeug, bei welchem zunächst ein Haftvermittler (12) zumindest bereichsweise auf einen Grundkörper (10) des Bauteils aufgebracht und anschließend eine aus einem Transferlack gefertigte Lackfolie (14) zumindest im Bereich des Haftvermittlers (12) auf dem Grundkörper (10) angeordnet und mittels des Haftvermittlers (12) stoffschlüssig mit dem Grundkörper (10) verbunden wird, wobei der Haftvermittler (12) mittels eines Extrusionsverfahrens auf den Grundkörper (10) aufgebracht wird.

2. Verfahren zum Herstellen eines Bauteils, insbesondere einer Dachzierleiste, für ein Kraftfahrzeug, bei welchem eine aus einem Transferlack gefertigte Lackfolie (14) und der Grundkörper (10) des Bauteils in ein Spritzgusswerkzeug eingebracht und ein Haftvermittler (12) zwischen Grundkörper (10) und Lackfolie (14) mittels eines Spritzgussverfahrens eingebracht wird, wobei die Lackfolie zumindest im Bereich des Haftvermittlers (12) auf dem Grundkörper (10) angeordnet und mittels des Haftvermittlers (12) stoffschlüssig mit dem Grundkörper (10) verbunden wird.

3. Verfahren nach Anspruch 2,
**dadurch gekennzeichnet, dass** die Transferlack-Folie (14) zunächst im Spritzgießprozess hinterspritzt und danach mit dem Grundkörper zum Verbinden zusammengebracht wird.

4. Verfahren nach Anspruch 1 oder 2,
**dadurch gekennzeichnet, dass** als Haftvermittler (12) Thermoplaste verwendet werden.

5. Verfahren nach Anspruch 4,
**dadurch gekennzeichnet, dass** als Thermoplast ein Polyvinylchlorid, insbesondere eine PVC-Schmelze verwendet wird.

6. Verfahren nach einem der Ansprüche 1 bis 5,
**dadurch gekennzeichnet, dass** das Bauteil nach dem Anordnen der Lackfolie (14) insbesondere mittels eines Wasserbads abgekühlt wird.

7. Verfahren nach einem der Ansprüche 1 bis 5,
**dadurch gekennzeichnet, dass** der Transferlack mindestens eine Farb- und/oder eine Glanzlackschicht aufweist.

8. Bauteil für ein Kraftfahrzeug mit einem Grundkörper (10), welcher als Oberflächenschutz eine mittels eines Haftvermittlers (12) stoffschlüssig mit dem Grundkörper (10) verbundene Deckschicht aufweist,
**dadurch gekennzeichnet, dass** die Deckschicht eine aus einem Transferlack gefertigte Lackfolie (14) umfasst.

9. Bauteil nach Anspruch 8,
**dadurch gekennzeichnet, dass** das Bauteil durch Zierstäbe für Kraftfahrzeuge im Bereich der Türen oder Scheiben, Bordkantenzierstäbe, Dachzierleisten gebildet wird, die gegebenenfalls eine Dichtlippe (16) umfassen.

10. Bauteil nach Anspruch 8 oder 9,
**dadurch gekennzeichnet, dass** der Grundkörper (10) zumindest abschnittsweise aus Aluminium und/oder einer Aluminium-Legierung besteht.

11. Bauteil nach Anspruch 10,
**dadurch gekennzeichnet, dass** die Transferlack-Folie (14) nur farblose oder transparente Lackschichten aufweist.

12. Bauteil nach Anspruch 8 oder 9,
**dadurch gekennzeichnet, dass** die Transferlack-Folie (14) Lacke in Kraftfahrzeugfarbe umfasst.
